# EUROPEAN PATENT APPLICATION

(11) **EP 1 127 598 A2**
(43) Date of publication of application: **29.08.2001**
(21) Application number: 01301342.0
(22) Date of filing: 16.02.2001
(51) Int. Cl.: A63F 13/10

(54) **Entertainment system, entertainment apparatus, recording medium, and program**

(30) Priority: 17.02.2000 JP 2000040033; 24.01.2001 JP 2001015426
(71) Applicant: Sony Computer Entertainment Inc., Tokyo 107-0052 (JP)
(72) Inventor: Hino, Akihiro, c/o Level-5 Inc., Fukuoka-shi, Fukuoka-ken 810-0041 (JP); Motomura, Kentaro, c/o Sony Computer Entert. Inc., Tokyo 107-0052 (JP)
(74) Representative: Horner, David Richard

(57) **Abstract**

An entertainment system has a normal action rendering means (402) for displaying a normal action image in which at least two hypothetical characters (300, 302) are making a normal action, and a special action rendering means (404) for displaying a special action image in which at least one of the hypothetical characters (300) changes from a normal action to a special action when a predetermined condition is satisfied, and the special action made by the one of the hypothetical characters (300) is completed when a control action made by the user satisfies a predetermined control condition indicated in a guidance (310), and a image display means (406) for outputting image data stored in an image memory (244) to a display monitor (18) to enable the display monitor (18) to display an image based on the image data.

## Description

### BACKGROUND OF THE INVENTION

### Field of the Invention:

The present invention relates to an entertainment system having at least an entertainment apparatus for executing various programs, a manual controller, and a display unit, an entertainment apparatus for executing various programs, a recording medium storing a program and data that are used by the entertainment apparatus, and a program for realizing the entertainment system.

### Description of the Related Art:

Some entertainment systems including entertainment apparatus such as video game machines display video game images based on video game data stored in a recording medium such as a CD-ROM or the like on the display screen of a television receiver while allowing the user or game player to play the video game with commands entered via a manual controller.

In those entertainment systems, the entertainment apparatus and the manual controller are usually connected to each other by a serial interface. When a clock signal is supplied from the entertainment apparatus to the manual controller, the manual controller sends key switch information based on the user's control entries in synchronism with the clock signal.

Recently developed manual controllers incorporate a vibration generating means for applying vibrations to the user based on a request from an external apparatus such as an entertainment apparatus, for example. While a video game is in progress, the vibration generating means applies various different kinds of vibrations to the user in response to user's different control entries.

Games that are played on video game machines include role-playing games, shooting games, driving games, combat games, etc.

When the game player plays a role-playing game, which is constructed around one basic story, the game progresses as a principal character travels to various regions in the story, and experiences events or searches for hidden items in various scenes. Since the role-playing game is primarily focused on experiencing events and searching for hidden items, battle scenes, if any, in the game tend to be boring to the user or game player.

A combat game is designed for a principal character to attack and knock out an opponent, and offers a variety of attack patterns available for the principal character to employ. The user or game player selects an attack pattern depending on the situation in which the principal character is placed. The user or game player wages an attack on an opponent in the selected attack pattern at an optimum time to cause substantial damage to the opponent for thereby placing the principal character in an advantageous position in the progress of the game. Therefore, the user or game player can enjoy the excitement of the combat game.

In order to deliver a succession of attacking techniques in the combat game, however, the user or game player has to be well aware of sequences of pressing a plurality of control members on the manual controller and times to press those control buttons. It takes a considerable period of time until the user or game player gets used to well manipulating the manual controller and enjoys the combat game to a satisfactory extent.

### SUMMARY OF THE INVENTION

Embodiments of the present invention seek to provide an entertainment system, an entertainment apparatus, a recording medium, and a program which are capable of turning battle scenes, which would tend to be monotonous in role-playing games, for example, into realistic scenes, allows the user or game player to easily deliver a succession of attacking techniques by operating a manual controller according to a guidance, and keeps the user or game player interested in a video game if applied to the video game.

According to an aspect of the present invention, there is provided an entertainment system comprising an entertainment apparatus for executing various programs, at least one manual controller for entering control requests from the user into the entertainment apparatus, a display unit for displaying images outputted from the entertainment apparatus, normal action rendering means for displaying a normal action image in which at least two hypothetical characters are making a normal action, and special action rendering means for displaying a special action image in which at least one of the hypothetical characters changes from a normal action to a special action when a predetermined condition is satisfied, and the special action made by the one of the hypothetical characters is completed when a control action made by the user satisfies a predetermined control condition indicated in a guidance.

According to another aspect of the present invention, there is provided an entertainment apparatus for connection to a manual controller for outputting a control request from the user and a display unit for displaying images, comprising normal action rendering means for displaying an image in which at least two hypothetical characters are making a normal action, and special action rendering means for displaying an image in which at least one of the hypothetical characters changes from a normal action to a special action when a predetermined condition is satisfied, and the special action made by the one of the hypothetical characters is completed when a control action made by the user satisfies a predetermined control condition indicated in a guidance.

According to still another aspect of the present invention, there is provided a recording medium storing a program and data for use in an entertainment apparatus for connection to a manual controller for outputting a control request from the user, and a display unit for displaying images, the program comprising the steps of displaying a normal action image in which at least two hypothetical characters are making a normal action, and displaying a special action image in which at least one of the hypothetical characters changes from a normal action to a special action when a predetermined condition is satisfied, and the special action made by the one of the hypothetical characters is completed when a control action made by the user satisfies a predetermined control condition indicated in a guidance.

According to yet another aspect of the present invention, there is provided a program readable and executable by a computer, for use in an entertainment apparatus for connection to a manual controller for outputting a control request from the user, and a display unit for displaying images, the program comprising the steps of displaying a normal action image in which at least two hypothetical characters are making a normal action, and displaying a special action image in which at least one of the hypothetical characters changes from a normal action to a special action when a predetermined condition is satisfied, and the special action made by the one of the hypothetical characters is completed when a control action made by the user satisfies a predetermined control condition indicated in a guidance.

If the present invention is applied to a battle scene in a role-playing game or a combat game, for example, a normal action, i.e., a normal battle action, is performed between the two hypothetical characters. When a certain condition is satisfied in the normal battle action, e.g., when one of the hypothetical characters stands with its back facing a wall or puts a foot into a step, at least one of the principal characters changes from the normal battle action to a special battle action. The special battle action is an action to deliver a dead blow such as a succession of attacking techniques in a combat game, for example.

When the control input from the user satisfies a control condition indicated by the guidance displayed on the display monitor, the special battle action is completed, and the opponent, e.g., a monster, falls down.

Therefore, battle scenes, which would tend to be monotonous in role-playing games, for example, are turned into realistic scenes, and the user or game player is allowed to easily deliver a succession of attacking techniques by operating the manual controller according to the guidance. If the entertainment system according to the present invention is applied to play a video game, then the user or game player is continuously interested in the video game.

The special action rendering means or step may comprise icon rendering means for, or the step of, displaying an icon indicative of the special action when the hypothetical character changes from the normal action to the special action. Therefore, the user is aware of the entry into the special action, i.e., can be mentally prepared to enter the special action, and hence can subsequently make smooth control actions to perform the special action. The icon is thus effective to allow children and old people to enjoy the video game.

The special action rendering means or step may comprise guidance rendering means for, or the step of, rendering an indicia representing at least one of control members on the manual controller as the guidance, and special action continuation determining means for, or the step of, comparing a time to prompt the user to press the control member corresponding to the indicia with a time when the user presses the corresponding control member, and determining whether the hypothetical character is to make the special action based on a compared result. The user thus only needs to operate the control member corresponding to the indicia at the prompting time indicated by the guidance.

The special action continuation determining means or step may comprise means for, or the step of, transferring control over to the normal action rendering means when the time when the user presses the corresponding control member deviates from the time to prompt the user to press the control member corresponding to the indicia beyond an allowable range. Therefore, if the time when the user presses the corresponding control member deviates from the time to prompt the user to press the control member corresponding to the indicia while the hypothetical character is making the special action, then the hypothetical character which is making the special action returns to the normal action.

The special action rendering means or step may comprise means for, or the step of, changing the number of indicia and the time to prompt the user to press the control member corresponding to each of the indicia, depending on characteristics of the hypothetical character other than the hypothetical character which makes the special action, among the at least two hypothetical characters. For example, if the hypothetical character which is making the special action is a principal character and the other hypothetical character is a monster, then the number of indicia and the time to prompt the user to press the control member corresponding to each of the indicia may be changed depending on characteristics of the monster. Accordingly, elements of fun are added to battle scenes which would tend to be monotonous, keeping the user interested in the video game.

The special action rendering means or step may comprise bar rendering means for, or the step of, rendering a bar which progresses randomly toward the indicia, and the time to prompt the user to press the control member corresponding to the indicia may represent a time when a leading end of the bar reaches the indicia. Therefore, the user may press the control member corresponding to the indicia at the time when the leading end of the bar reaches the indicia.

The special action rendering means or step may comprise means for, or the step of, changing a progressing pattern of the bar depending on characteristics of the hypothetical character other than the hypothetical character which makes the special action, among the at least two hypothetical characters.

If the bar is displayed in a lower region or a corner of the display screen of the display unit, then the user may possibly overlook a special action made by the hypothetical character displayed in a central area of the display screen because the user may be distracted to the progress of the bar displayed in the lower region or the corner of the display screen.

If at least the bar is displayed as a semitransparent bar in front of the hypothetical characters, then the bar may be displayed as a semitransparent image of a large size in the center of the display screen, rather than in a lower region or a corner of the display screen. As a result, the user can see a special action made by the hypothetical character and press control members on the manual controller while simultaneously confirming the progressing pattern of the bar. Therefore, the user can see and enjoy various special actions made by the hypothetical character.

### BRIEF DESCRIPTION OF THE DRAWINGS

The invention will now be described by way of example with reference to the accompanying drawings, throughout which like parts are referred to by like references, and in which:
FIG. 1 is a block diagram of a circuit arrangement of an entertainment system according to an embodiment of the present invention;
FIG. 2 is a perspective view of a manual controller;
FIG. 3 is a plan view of the manual controller;
FIG. 4 is a block diagram of a circuit arrangement of the manual controller;
FIG. 5 is a view showing a displayed image of a normal battle action of a principal character;
FIG. 6 is a view showing a displayed image similar to FIG. 5, with an icon displayed indicating that the principal character is about to wage a special attack;
FIG. 7 is a view showing a displayed image similar to FIG. 5, with the principal character waging a special attack as a bar progresses in a guidance;
FIG. 8 is a view showing another guidance;
FIG. 9 is a functional block diagram of a battle mode processing means according to an embodiment of the present invention;
FIG. 10 is a flowchart of a processing sequence of the battle mode processing means, particularly, a process of rendering a normal action of a monster with a normal action rendering means;
FIGS. 11 through 14 are flowcharts of a process of rendering a normal action of a principal character with the normal action rendering means;
FIG. 15 is a flowchart of a processing sequence of an icon rendering means of a special action rendering means;
FIG. 16 is a flowchart of a processing sequence of a guidance rendering means of the special action rendering means;
FIG. 17 is a flowchart of a processing sequence of a special action continuation determining means of the special action rendering means; and
FIG. 18 is a flowchart of a processing sequence of the special action rendering means.

### DESCRIPTION OF THE PREFERRED EMBODIMENT

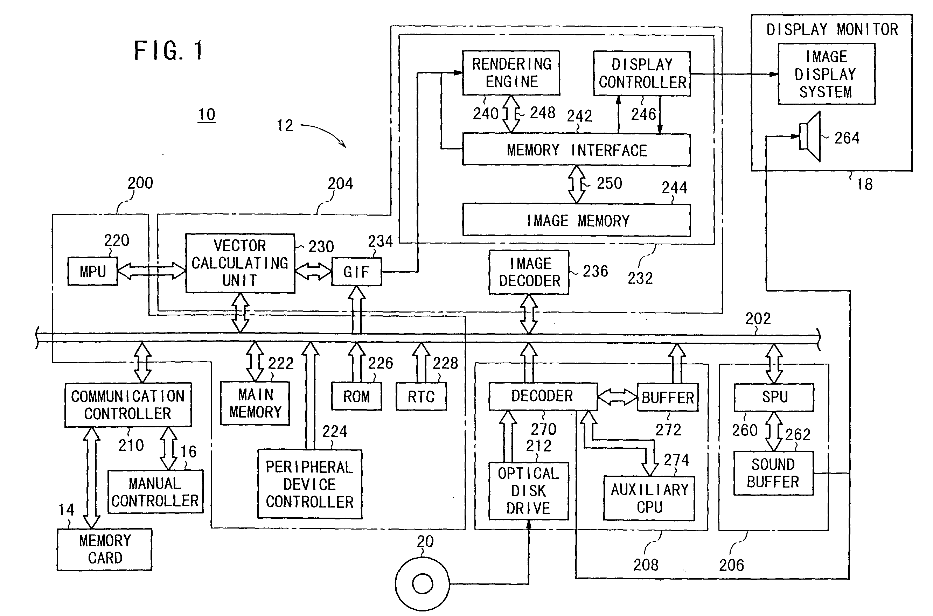

An entertainment system, an entertainment apparatus, a recording medium, and a program embodying the present invention as applied to a video game apparatus will be described below with reference to FIGS. 1 through 18.

As shown in FIG. 1, an entertainment system 10 basically comprises an entertainment apparatus 12 for executing various programs, a memory card 14 detachably connected to the entertainment apparatus 12, a manual controller 16 detachably connected to the entertainment apparatus 12, and a display monitor 18 such as a television receiver which is supplied with video and audio output signals from the entertainment apparatus 12.

The entertainment apparatus 12 reads a game program recorded in a mass storage medium such as an optical disk 20 such as a CD-ROM or the like, and executes a game, for example, based on the program depending on commands supplied from the user, e.g., the game player, via the manual controller 16. The execution of the game mainly represents controlling the progress of the game by controlling the display of images and the generation of sounds on the display monitor 18 based on manual input actions entered from the manual controller 16.

The entertainment apparatus 12 generally comprises a control system 200, a graphic generating system 204 connected to the control system 200 via a system bus 202, a sound generating system 206 connected to the control system 200 via the system bus 202, and an optical disk control system 208 connected to the control system 200 via the system bus 202. A communication controller 210 for controlling data to be inputted to and outputted from the manual controller 16 and the memory card 14 is also connected to the control system 200 via the system bus 202.

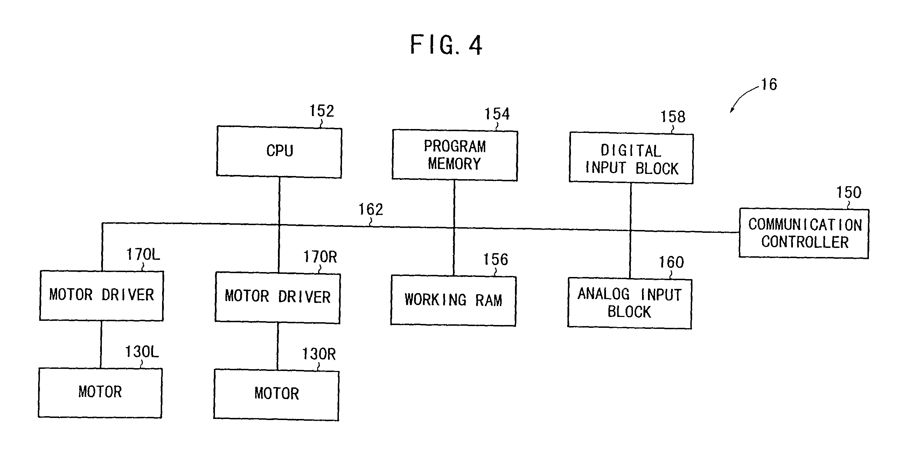

The manual controller 16 supplies commands (including control data) from the user via a communication controller 150 (see FIG. 4) of the manual controller 16 and the communication controller 210 to the entertainment apparatus 12. The optical disk control system 208 includes an optical disk drive 212 in which the optical disk 20, which may comprise a CD-ROM or the like as a specific example of a recording medium according to the present invention, is loaded.

The control system 200 controls motions of characters displayed on the display monitor 18 based on a program and data read from the optical disk 20 and commands supplied from the manual controller 16.

The control system 200 includes an MPU 220 for controlling the entertainment apparatus 12, a main memory 222 used for operating various programs and storing various data, a peripheral device controller 224 for controlling interrupts and direct memory access (DMA) data transfer, a read-only memory (ROM) 226 which stores various programs such as an operating system program for managing the graphic generating system 204, the sound generating system 206, etc., and which has an OSD function to execute a control program such as kernel, and a real-time clock (RTC) 228 having a calendar and clock function. The main memory 222 is capable of executing at least the game program thereon.

The MPU 220 controls the entertainment apparatus 12 in its entirety by executing the operating system program stored in the ROM 226. The MPU 220 comprises a 32-bit RISC-CPU, for example.

When the entertainment apparatus 12 is turned on, the MPU 220 executes the operating system program stored in the ROM 226 to start controlling the graphic generating system 204, the sound generating system 206, etc.

When the operating system program is executed, the MPU 220 initializes the entertainment apparatus 12 in its entirety for confirming its operation, and thereafter controls the optical disc control system 208 to execute an application program such as a game program recorded in the optical disk 20.

As the application program such as a game program is executed, the MPU 220 controls the graphic generating system 204, the sound generating system 206, etc. depending on commands entered by the user for thereby controlling the display of images and the generation of music sounds and sound effects.

The graphic generating system 204 comprises a vector calculating unit 230 for performing floating point vector calculations required for geometry processing, an image processor 232 for generating image data under the control of the MPU 220 and outputting the generated image data to the display monitor 18, which is a CRT in this embodiment, a graphic interface (GIF) 234 for arbitrating transfer paths between the MPU 220, the vector calculating unit 230, and the image processor 232, and an image decoder 236 for decoding image data compressed and encoded by an orthogonal transform such as a discrete cosine transform.

The image processor 232 comprises a rendering engine 240, a memory interface 242, an image memory 244, and a display controller 246 such as a programmable CRT controller.

The rendering engine 240 renders (stores) image data into the image memory 244 via the memory interface 242 according to a rendering command supplied from the MPU 220.

A first bus 248 is connected between the memory interface 242 and the rendering engine 240, and a second bus 250 is connected between the memory interface 242 and the image memory 244. The first and second buses 248, 250 each have a 128-bit width to allow the rendering engine 240 to render (store) image data at a high speed into the image memory 244.

The rendering engine 240 is capable of rendering image data of 320 × 240 pixels or 640 × 480 pixels according to the NTSC or PAL standards on a real-time basis ten and several times to several tens times in a period of time ranging from 1/60 to 1/30 second.

The image memory 244 is of a unified memory structure capable of specifying a texture rendering area and a display rendering area as one area.

The display controller 246 serves to write texture data read from the optical disk 20 via the optical disk drive 212 and texture data generated in the main memory 222 into the texture rendering area of the image memory 244 via the memory interface 242, and read image data stored in the display rendering area of the image memory 244 via the memory interface 242 and output the read image data to the display monitor 18, which displays an image thereon based on the image data.

The sound generating system 206 comprises a sound processing unit (SPU) 260 for generating music sounds, sound effects, etc. based on instructions from the MPU 220, and a sound buffer 262 for storing music sounds, sound effects, etc. generated by the SPU 260. Audio signals representing music sounds, sound effects, etc. generated by the SPU 260 are supplied to audio terminals of the display monitor 18. The display monitor 18 has a speaker 264 which radiates music sounds, sound effects, etc. generated by the SPU 260 based on the supplied audio signals.

The SPU 260 has an ADPCM (adaptive differential PCM) demodulating function for reproducing 16-bit audio data which has been encoded as 4-bit differential signal by ADPCM, a reproducing function for reproducing waveform data stored in the sound buffer 262 to generate sound effects, etc., and a modulating function for modulating and reproducing the waveform data stored in the sound buffer 262.

The sound generating system 206 with these functions can be used as a sampling sound source which generates music sounds, sound effects, etc. based on the waveform data stored in the sound buffer 262 according to instructions from the MPU 220.

The optical disk control system 208 comprises an optical disk drive 212 for reproducing application programs and data recorded on the optical disk 20, a decoder 270 for decoding programs and data that are recorded with an error correcting code added thereto, and a buffer 272 for temporarily storing data read from the optical disk drive 212 so as to allow the data from the optical disk 20 to be read at a high speed. An auxiliary CPU 274 is connected to the decoder 270.

Audio data recorded on the optical disk 20 which is read by the optical disk drive 212 includes PCM data converted from analog sound signals, in addition to the ADPCM data.

The ADPCM data, which is recorded as 4-bit differential data of 16-bit digital data, is decoded by the decoder 270, supplied to the SPU 260, converted thereby into analog data, and applied to drive the speaker 264.

The PCM data, which is recorded as 16-bit digital data, is decoded by the decoder 270 and then applied to drive the speaker 264.

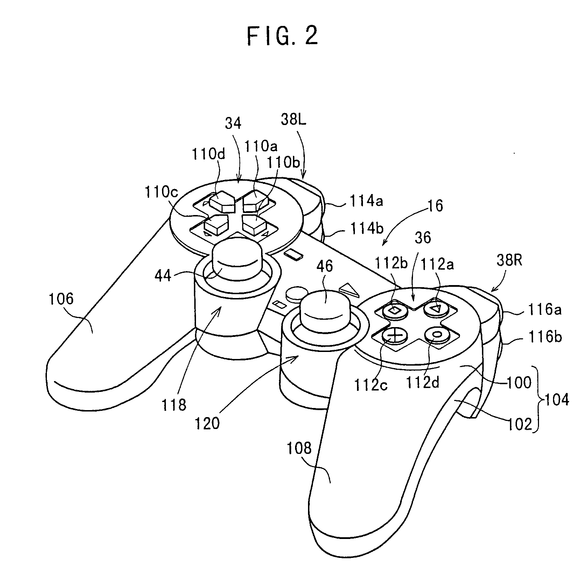

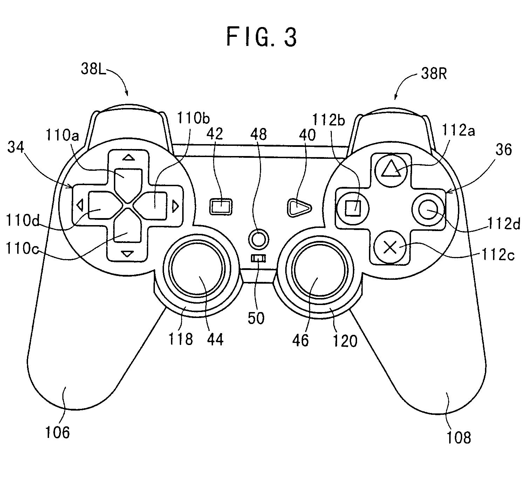

As shown in FIGS. 2 and 3, the manual controller 16 has first and second control pads 34, 36, an L (Left) button 38L, an R (Right) button 38R, a start button 40, and a selection button 42. The manual controller 16 also has joysticks 44, 46 for inputting analog control actions, a mode selection switch 48 for selecting control modes of the joysticks 44, 46, and a mode indicator 50 for indicating a selected control mode. The mode indicator 50 comprises a light-emitting element such as a light-emitting diode or the like.

As shown in FIG. 2, the manual controller 16 has a housing 104 comprising an upper member 100 and a lower member 102 which are mated and joined to each other by fasteners such as screws.

As shown in FIGS. 2 and 3, a pair of left and right grips 106, 108 projects from one side of respective opposite ends of the housing 104. The left and right grips 106, 108 are shaped so as to be gripped by the palms of left and right hands of the user or game player when the manual controller 16 is connected to the entertainment apparatus 12 and information retrieval is carried out or the game is played thereby, for example.

As shown in FIG. 3, the left and right grips 106, 108 are progressively spaced away from each other toward their distal ends. To allow the game player to grip the left and right grips 106, 108 comfortably for a long period of time, the left and right grips 106, 108 are tapered from their joint with the housing 104 toward their distal ends, and have arcuate outer peripheral surfaces and arcuate distal end surfaces.

As shown in FIGS. 2 and 3, the first control pad 34 is disposed on one end of the housing 104 and comprises a first pressable control member (up button) 110a, a second pressable control member (right button) 110b, a third pressable control member (down button) 110c, and a fourth pressable control member (left button) 110d. The first through fourth pressable control members 110a, 110b, 110c, 110d project on an upper surface of the housing 104 and are arranged in a crisscross pattern.

The first control pad 34 includes switch elements as signal input elements associated respectively with the first through fourth pressable control members 110a, 110b, 110c, 110d. The first control pad 34 functions as a directional controller for controlling the direction of movement of a displayed game character, for example. When the game player selectively presses the first through fourth pressable control members 110a, 110b, 110c, 110d to turn on or off the switch elements associated respectively with the first through fourth pressable control members 110a, 110b, 110c, 110d, the displayed game character moves in the direction corresponding to the pressed one of the first through fourth pressable control members 110a, 110b, 110c, 110d.

As shown in FIGS. 2 and 3, the second control pad 36 is disposed on the other end of the housing 104 and comprises a first pressable control member (△ button) 112a, a second pressable control member (□ button) 112b, a third pressable control member (× button) 112c, and a fourth pressable control member (○ button) 112d. The first through fourth pressable control members 112a, 112b, 112c, 112d project on the upper surface of the housing 104 and are arranged in a crisscross pattern.

The first through fourth pressable control members 112a, 112b, 112c, 112d are constructed as independent members, and associated with respective switch elements disposed in the second control pad 36.

The second control pad 36 serves as a function setting/performing unit for setting functions for a displayed game character assigned to the pressable control members 112a - 112d or performing functions of a displayed game character when the switch elements associated with the pressable control members 112a - 112d are turned on.

The L button 38L and the R button 38R are disposed on a side of the housing 104 remote from the left and right grips 106, 108 and positioned respectively at the opposite ends of the housing 104. As shown in FIGS. 2 and 4, the L button 38L has a first left pressable control member (L1 button) 114a and a second left pressable control member (L2 button) 114b, and the R button 38R has a first right pressable control member (R1 button) 116a and second right pressable control member (R2 button) 116b, respectively. The L button 38L and the R button 38R have respective switch elements associated respectively with the pressable control members (the L1 button 114a, the L2 button 114b, the R1 button 116a, and the R2 button 116b).

The L button 38L and the R button 38R serve as respective function setting/performing units for setting functions for a displayed game character assigned to the pressable control members 114a, 114b and 116a, 116b or performing functions of a displayed game character when the switch elements associated with the pressable control members 114a, 114b and 116a, 116b are turned on.

As shown in FIGS. 2 and 3, the manual controller 16 also has first and second analog control pads 118, 120 disposed respectively at confronting corners defined between the housing 104 and the proximal ends of the left and right grips 106, 108 which are joined to the housing 104.

The first and second analog control pads 118, 120 have the respective joysticks 44, 46 which can be tilted in all directions (360°) about control shafts thereof, and respective signal input elements such as variable resistors or the like which are operable by the respective joysticks 44, 46. Specifically, the control shafts of the left and right joysticks 44, 46 are normally urged to return to their neutral positions by biasing members. The left and the right joysticks 44, 46 can be freely tilted in all directions (360°) about the axes of the control shafts.

The first and second analog control pads 118, 120 can move a displayed game character while rotating the same or while changing its speed, and can make an analog-like action such as to change the form of a displayed character, when the game player manipulates the joysticks 44, 46. Therefore, the first and second analog control pads 118, 120 are used as a control unit for entering command signals for a displayed character to perform the above movement or action.

Analog input values produced when the user moves the left and right joysticks 44, 46 are available in a vertical range from an uppermost vertical value of "0" to a lowermost vertical value of "255" and a horizontal range from a leftmost horizontal value of "0" to a rightmost horizontal value of "255".

When the joysticks 44, 46 are pushed in, the first and second analog control pads 118, 120 output other signals different from those signals in the horizontal and vertical ranges.

When the mode selection switch 48 is pressed, it can select a control mode for allowing a command signal to be inputted from the first and second analog control pads 118, 120 or a control mode for inhibiting a command signal from being inputted from the first and second analog control pads 118, 120.

When the mode selection switch 48 is pressed, the functions of the first through fourth pressable control members 112a, 112b, 112c, 112d of the second control pad 36, and the functions of the pressable control members 114a, 114b and 116a, 116b of the L button 38L and the R button 38R are changed depending on the control mode selected by the pressed mode selection switch 48. Depending on the control mode selected by the mode selection switch 48, the mode indicator 50 flickers and changes its indication light.

As shown in FIG. 4, the manual controller 16 comprises a communication controller 150, a CPU 152, a program memory 154, a working RAM 156, a digital input block 158, an analog input block 160, a left motor driver 170L, a left motor 130L, a right motor driver 170R, and a right motor 130R. These components of the manual controller 16 are connected to a bus 162.

The digital input block 158 functions as a manual input controller for the pressable control members 110a - 110d of the first control pad 34 and the pressable control members 112a - 112d of the second control pad 36. The analog input block 160 functions as a manual input controller for the left and right joysticks 44, 46. The digital input block 158 and the analog input block 160 allow the user to enter various items of information into the manual controller 16.

The communication controller 150 has a function to effect serial communications with an external device. The communication controller 150 is electrically connectable to the communication controller 210 (see FIG. 1) of the entertainment apparatus 12, for example, for data communications with the entertainment apparatus 12.

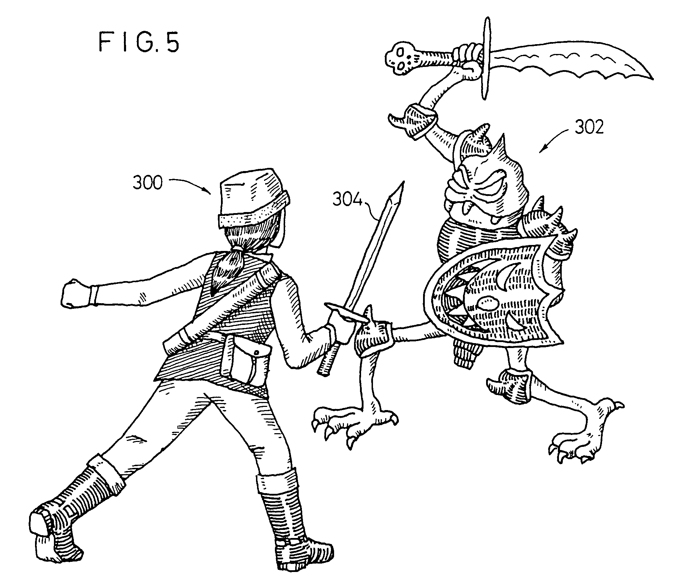

A characteristic function of the entertainment system 10 according to the present embodiment will be described below with reference to FIGS. 5 through 18.

According to the characteristic function, when a certain condition is satisfied while at least two hypothetical characters are making a normal action, at least one of the hypothetical characters changes from the normal action to a special action, and when a control action made by the user satisfies a certain control condition indicated by a guidance displayed on the display monitor, the special action performed by the hypothetical character is completed.

The above function as applied to a scene of a battle between a principal character and a monster in a role-playing game will be described below with reference to FIGS. 5 through 8.

As shown in FIG. 5, one of two hypothetical characters displayed on the display monitor 18 is used as a principal character 300 that moves under control commands from the user and the other hypothetical character as a monster 302 confronting the principal character 300.

When the principal character 300 runs into the monster 302 and starts fighting against the monster 302, a normal battle action takes place. The normal battle action is such an action that when the user presses the control members 110a - 110d, e.g., when the user presses the ○ button 112d, the principal character 300 attacks the monster 302 with a sword 304, and when the user presses the × button 112c, the principal character 300 defends himself from the monster 302.

In the normal battle action, when a certain condition is satisfied, e.g., when the monster 302 is put in a disadvantageous position, e.g., when the monster 302 stands with its back facing a wall or puts a foot into a step, or when the HP (hit point) of the principal character 300 becomes equal to or lower than a certain value, the principal character 300 changes from the normal battle action to a special battle action. The special battle action is an action to deliver a dead blow such as a succession of attacking techniques in a combat game, for example. When such a dead blow strikes the monster 302, the HP of the monster 302 is instantaneously eliminated, and the monster 302 falls down.

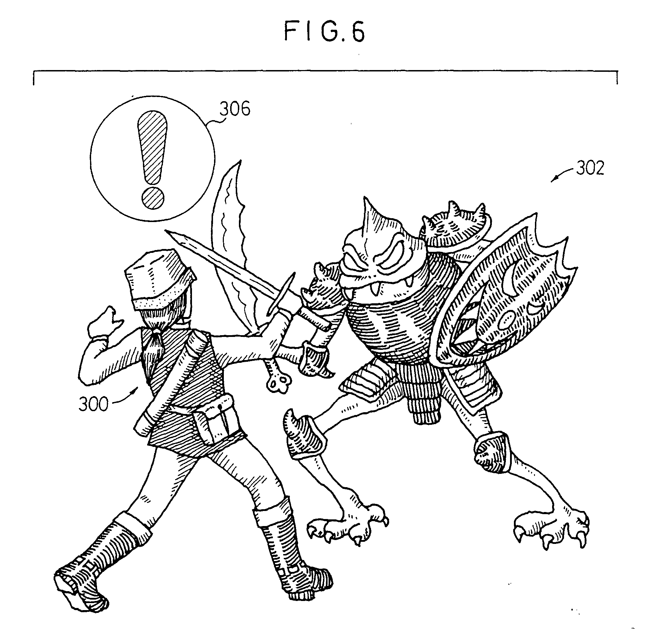

When the principal character 300 enters the special battle action, as shown in FIG. 6, an icon 306 indicative of the special battle action is displayed for 2 seconds, for example, in the vicinity of the principal character 300. With the icon 306 displayed, the user can recognize that the principal character 300 enters the special battle action.

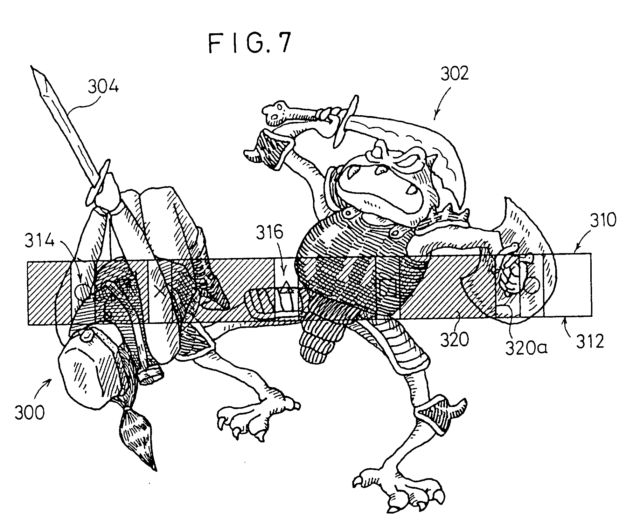

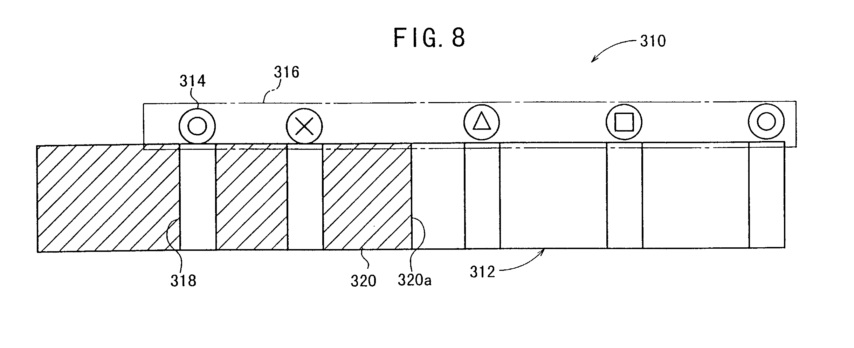

Thereafter, as shown in FIG. 7, a guidance 310 is displayed substantially centrally on the display screen of the display monitor 18. The guidance 310 comprises an area 312 for displaying a bar 320 (hereinafter referred to as "bar display area 312"), and an area 316 for displaying indicia 314 representing the four control members, i.e., the ○ button 112d, the △ button 112a, the × button 112c, and the □ button 112b, (hereinafter referred to as "indicia display area 316"). At least the bar display area 312 is displayed in a semitransparent fashion. In the example shown in FIG. 7, the indicia display area 316 is displayed as a strip. As shown in FIG. 8, however, the indicia display area 316 with the indicia 314 displayed therein may be positioned above the bar display area 312, and strips 318 may be displayed in the bar display area 312 at respective positions aligned with the respective indicia 314.

When the guidance 310 is displayed, a bar 320 progresses or moves from the left end of the bar display area 312 toward the right end thereof with certain timing. While the bar 320 is progressing, the principal character 300 performs the special battle action different from the normal battle action, as shown in FIG. 7. In FIG. 7, the principal character 300 jumps backward, and at the same time cuts the monster 302 with the sword 304 which the principal character 300 is holding.

When a leading end 320a of the bar 320 progressing toward the right end of the bar display area 312 reaches the indicia display area 316 (see FIG. 7) or one of the strips 318 (see FIG. 8), if the user presses the control member, e.g., the ○ button 112d, indicated by the indicia 314 corresponding to the indicia display area 316 or the strip 318, then the special battle action made by the principal character 300 is continued.

When the user presses the control members corresponding to the indicia 314 displayed in the guidance 310 at correct times, the principal character 300 delivers a succession of attacking techniques until finally the monster 302 falls down.

However, when the leading end 320a of the bar 320 displayed in progress reaches the indicia display area 316 or one of the strips 318, if the user fails to press the control member indicated by the indicia 314 or if the user presses a wrong control member or presses the correct control member at a wrong time, then the special battle action made by the principal character 300 is put to an end, and the principal character 300 enters the normal battle action again.

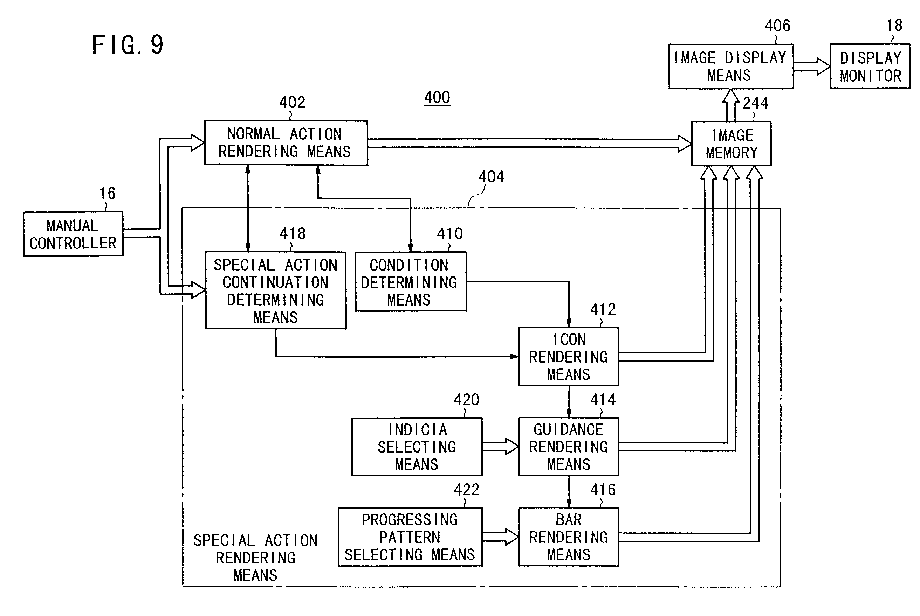

One example of software for performing the above characteristic function will be described below with reference to FIGS. 9 through 18. As shown in FIG. 9, the software comprises a battle mode processing means 400.

The battle mode processing means 400 can be supplied to the entertainment apparatus 12 from a randomly accessible recording medium such as the optical disk 20 or the memory card 14, or a network. It is assumed in the present embodiment that the battle mode processing means 400 is read from the optical disk 20 such into the entertainment apparatus 12.

The battle mode processing means 400 is downloaded in advance from the optical disk 20 played back by the entertainment apparatus 12 into the main memory 222 in the control system 200 thereof according to a predetermined process, and executed by the MPU 220 of the control system 200.

As shown in FIG. 9, the battle mode processing means 400 comprises a normal action rendering means 402 for displaying a normal action image in which at least two hypothetical characters (the principal character 300 and the monster 302) are doing a normal action, a special action rendering means 404 for displaying a special action image in which at least one of the hypothetical characters (the principal character 300) changes from a normal action to a special action when a certain condition is satisfied, and the special action made by the hypothetical character (the principal character 300) is completed when a control action made by the user satisfies a certain control condition in the guidance 310, and an image display means 406 for outputting image data stored in the image memory 244 to the display monitor 18 to enable the display monitor 18 to display an image based on the image data.

The special action rendering means 404 comprises a condition determining means 410 for determining whether a condition to enter the special action is satisfied or not, an icon rendering means 412 for displaying the icon 306 (see FIG. 6) indicative of the special action when the hypothetical character (the principal character 300) changes from the normal action to the special action, a guidance rendering means 414 for rendering the guidance 310 (see FIG. 7) that comprises the semitransparent bar display area 312 and the indicia display area 316 and also rendering the indicia 314 representing at least one control member on the manual controller 16 in the indicia display area 316, a bar rendering means 416 for rendering the semitransparent bar 320 as it progresses randomly from the left end to right end of the bar display area 312, and a special action continuation determining means 418 for comparing the time to prompt the user to press the control member corresponding to the indicia 314, i.e., the time when the leading end 320a of the bar 320 reaches the indicia display area 316 or one of the strips 318, with the time when the user presses the corresponding control member on the manual controller 16, and determining whether the principal character 300 is to make the special action based on the compared result.

The guidance rendering means 414 has an indicia selecting means 420 for changing the number of indicia 314 displayed in the guidance 310 and an array of those indicia 314 depending on the characteristics of the opponent, i.e., the monster 302. The bar rendering means 416 has a progressing pattern selecting means 422 for changing a progressing pattern of the bar 320 depending on the characteristics of the opponent, i.e., the monster 302.

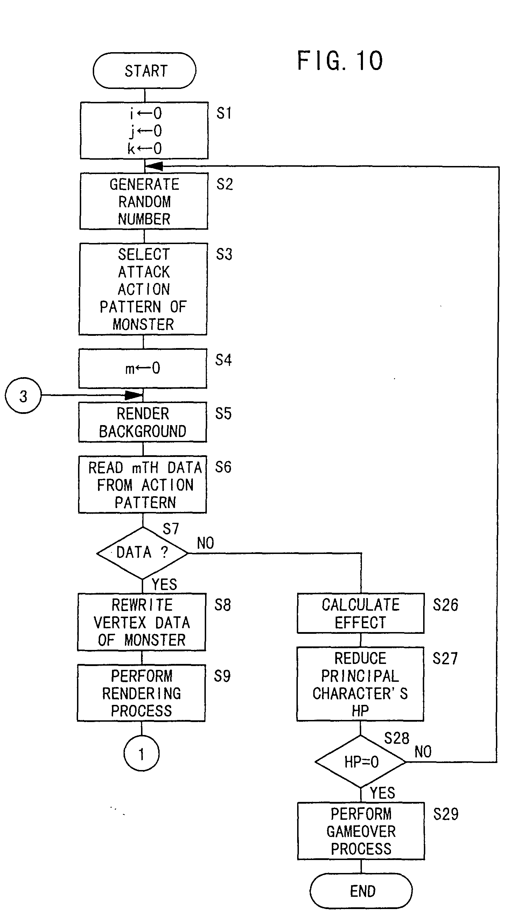

A processing sequence of the battle mode processing means 400 will be described below with reference to FIGS. 10 through 18.

First, the normal action rendering means 402 of the battle mode processing means 400 performs its own processing sequence. In step S1 shown in FIG. 10, the normal action rendering means 402 stores initial values "0" respectively in an index register i used to update the number of times that a special attack is continued, an index register j used to update the display of the icon 306, and an index register k used to cause the principal character 300 to perform a normal attack action, thus initializing these registers i, j, k.

In step S2, the normal action rendering means 402 generates a random number. In step S3, the normal action rendering means 402 selects an attack action pattern corresponding to the generated random number from a plurality of attack action patterns. Each of the attack action patterns comprises an array of plural action data, and object data of the monster 302 is rendered based on the array of plural action data for thereby making one attack action on the display monitor 18.

In step S4, the normal action rendering means 402 stores an initial value "0" in an index register m used to wage an attack action on the monster 302, thus initializing the index register m. Thereafter, in step S5, the normal action rendering means 402 stores a background image based on the coordinates of a viewpoint in the image memory 244.

In step S6, the normal action rendering means 402 reads mth action data from the selection attack action pattern. In step S7, the normal action rendering means 402 determines whether there is action data or not. If there is action data, then control proceeds to step S8 in which the normal action rendering means 402 rewrites vertex data of the object data of the monster 302 based on the content of the action data. In step S9, the normal action rendering means 402 renders three-dimensional image data of the monster 302 based on the object data of the monster 302, and stores the three-dimensional image data of the monster 302 in the image memory 244.

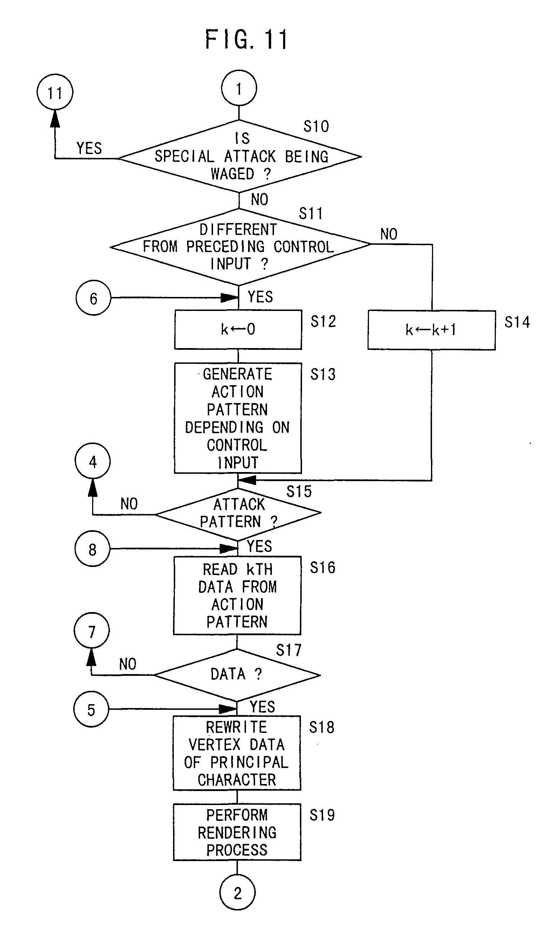

In step S10 shown in FIG. 11, the normal action rendering means 402 determines whether a special attack is being continued or not based on whether a special attack flag is set to "1" or not. If the special attack flag is "0" indicating that a special attack is not presently waged, then control goes to step S11 in which the normal action rendering means 402 determines whether a control input from the manual controller 16 is different from the preceding control input or not. A different control input is entered when the user presses one of the direction buttons 110a - 110d or the ○ button 112d, for example, after the user has not pressed any control members or buttons, or when the user presses the right button 110b, for example, after the user has pressed the left button 100d, for example.

If a control input from the manual controller 16 is judged as being different from the preceding control input in step S11, then control goes to step S12 in which the normal action rendering means 402 stores an initial value "0" in the index register k, thus initializing the index register k. Thereafter, in step S13, the normal action rendering means 402 calculates an action of the principal character 300 based on the present control input, thereby generating an action pattern comprising a plurality of action data. If a control input from the manual controller 16 is judged as being the same as the preceding control input in step S11, then control goes to step S14 in which the normal action rendering means 402 increments the value of the index register k by "1".

When the processing in step S13 or the processing in step S14 is finished, control goes to step S15 in which the normal action rendering means 402 determines whether the present action pattern is an attack pattern or not based on whether the control input is an input corresponding to the ○ button 112d, for example, which indicates an attack.

If the present action pattern is an attack pattern, then control goes to step S16 in which the normal action rendering means 402 reads kth action data from the present action pattern. In step S17, the normal action rendering means 402 determines whether there is action data or not, i.e., whether a normal attack action is finished or not.

If there is action data, i.e., if a normal attack action is not finished, then control goes to step S18 in which the normal action rendering means 402 rewrites vertex data of the object data of the principal character 300 based on the content of the present action data. In step S19, the normal action rendering means 402 renders three-dimensional image data of the principal character 300 based on the object data of the principal character 300, and stores the three-dimensional image data of the principal character 300 in the image memory 244.

A hidden surface removal process for the background image and the three-dimensional images of the principal character 300 and the monster 302 is carried out according a Z buffering process.

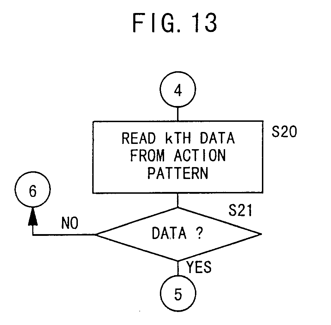

If the present action pattern is not an attack pattern in step S15, then control proceeds to step S20 shown in FIG. 13 in which the normal action rendering means 402 reads kth action data from the present action pattern. Thereafter, in step S21, the normal action rendering means 402 determines whether there is action data or not, i.e., whether a normal action other than an attack action, e.g., a direction changing action or a defensive action, is finished or not.

If there is action data, i.e., if a normal action other than an attack action is not finished, then the processing in step S18 and step S19 shown in FIG. 11 is performed, and three-dimensional image data of the principal character 300 is stored in the image memory 244.

If a normal action other than an attack action is finished in step S21, then control returns to step S12 shown in FIG. 13, and the normal action rendering means 402 generates an action pattern again.

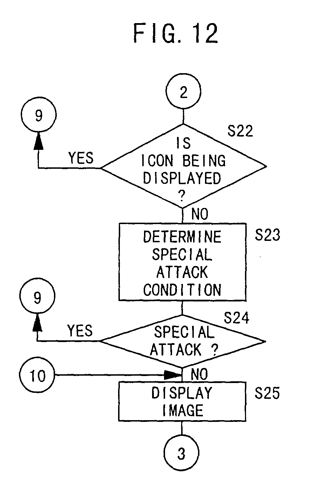

When the rendering process in step S19 is finished, control goes to step S22 shown in FIG. 12 in which the normal action rendering means 402 determines whether the icon 306 is being presently displayed or not based on whether an icon display flag is set to "1" or not. If the icon 306 is not being displayed, then control goes to step S23 in which the condition determining means 410 determines whether a condition to wage a special attack is satisfied or not.

Specifically, the condition determining means 410 determines whether a condition to wage a special attack is satisfied or not based on whether the monster 302 is put in a disadvantageous position, e.g., whether the monster 302 stands with its back facing a wall or puts a foot into a step, or whether the HP (hit point) of the principal character 300 becomes equal to or lower than a certain value.

If a condition to wage a special attack is not satisfied, then control goes via a decision process in step S24 to step S25 in which the image display means 406 outputs image data stored in the image memory 244 to the display monitor 18, which displays a corresponding image on the display screen. When the processing in step S25 is finished, control goes back to step S5 in FIG. 10, and the processing from step S5 is repeated.

The above processing is repeated to display a normal battle action of the principal character 300 and the monster 302 on the display monitor 18 as shown in FIG. 5.

If there is no action data and an attack action by the monster 302 is finished in step S7, then control goes to step S26 in which the normal action rendering means 402 calculates an effect imposed on the principal character 300 by the attack from the monster 302 based on the hitting ratio of the attack from the monster 302, the level difference between the monster 302 and the principal character 300, the attacking power of the monster 302, the physical strength of the principal character 300, and the protective gear that the principal character 300 wears. If the principal character 300 is not hit by the attack from the monster 302, then the effect imposed on the principal character 300 by the attack from the monster 302 is "0".

In step S27, the normal action rendering means 402 reduces the HP of the principal character 300 based on the calculated effect. In step S28, the normal action rendering means 402 determines whether the HP of the principal character 300 is equal to "0" or not.

If the HP of the principal character 300 is not equal to "0", then control goes back to step S2 to render image data for a next attack action by the monster 302. If the HP of the principal character 300 is equal to "0", then control goes to step S29 in which the normal action rendering means 402 performs a gameover process, e.g., displays a message indicative of a gameover. The processing sequence of the battle mode processing means 400 is now put to an end.

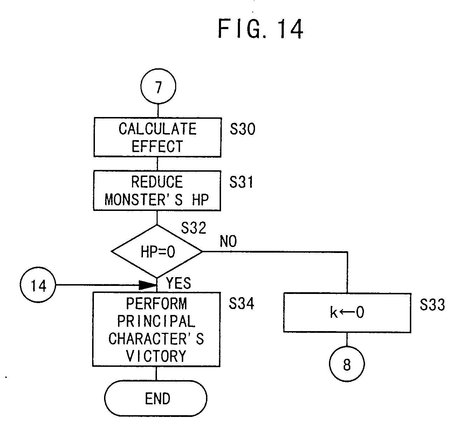

If there is no action data, i.e., if a normal attack action by the principal character 300 is finished, in step S17 shown in FIG. 11, then control goes to step S30 shown in FIG. 14 in which the normal action rendering means 402 calculates an effect imposed on the monster 302 by the attack from the principal character 300 based on the hitting ratio of the attack from the principal character 300, the level difference between the principal character 300 and the monster 302, the attacking power of the principal character 300, the physical strength of the principal character 300, and the defending ratio of the monster 302.

In step S31, the normal action rendering means 402 reduces the HP of the monster 302 based on the calculated effect. In step S32, the normal action rendering means 402 determines whether the HP of the monster 302 is equal to "0" or not.

If the HP of the monster 302 is not equal to "0", then the normal action rendering means 402 initializes the index register k in step S33. Thereafter, control goes back to step S16 in FIG. 11 to render image data for a next attack action by the principal character 300. If the HP of the monster 302 is equal to "0", then control goes to step S34 in which the normal action rendering means 402 displays an image showing a victory action, e.g., a triumphant gesture, made by the principal character 300, and an acquisition of a prize from the monster 302. The processing sequence of the battle mode processing means 400 is now put to an end.

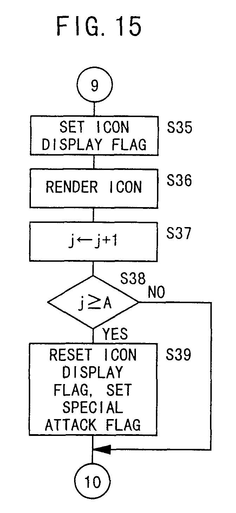

If a condition to wage a special attack is satisfied in step S23 in FIG. 12, then control goes via the decision process in step S24 to a processing sequence of the icon rendering means 412 of the special action rendering means 404. According to the processing sequence of the icon rendering means 412, the icon rendering means 412 sets the icon display flag to "1" in step S35 shown in FIG. 15, and then renders the icon 306 indicative of the beginning of a special attack in the vicinity of the principal character 300 in step S36.

In step S37, the icon rendering means 412 increments the value of the index register j by "1". Thereafter, in step S38, the icon rendering means 412 determines whether the icon 306 has been displayed for a predetermined time, e.g., 2 seconds, or not, based on whether or not the value of the index register j is equal to or greater than a number A which corresponds to the number of frames for 2 seconds.

If the icon 306 has not been displayed for 2 seconds, then control goes to step S25 in FIG. 12 to display image 'data. At this time, the icon 306 is displayed in the vicinity of the principal character 300 which is doing a normal attack action.

If the icon 306 has been displayed for 2 seconds, then control goes to step S39 in which the icon rendering means 412 initializes the icon display flag, and sets a special attack flag to "1", after which control goes to step S25 in FIG. 12 to display image data.

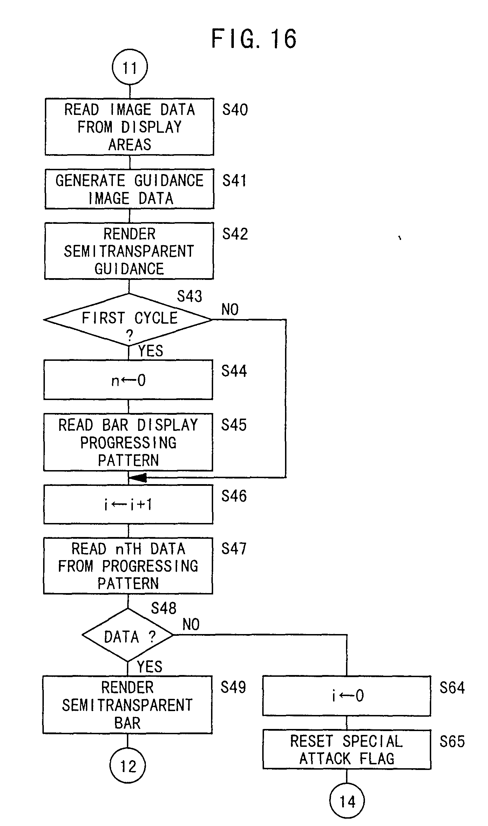

After the special attack flag is set to "1", control goes via step S10 shown in FIG. 11 to step S40 shown in FIG. 16 in which the guidance rendering means 414 reads image data of the bar display area 312 and the indicia display area 316 of the guidance 310. In step S41, the indicia selecting means 420 generates image data of the guidance 310 based on the number of indicia 314 and an array of those indicia 314 depending on the characteristics of the monster 302 with which the principal character 300 is presently fighting. Thereafter, in step S42, the indicia selecting means 420 stores the generated image data of the guidance 310 as semitransparent image data in the image memory 244.

In step S43, the guidance rendering means 414 determines whether the present cycle is a first cycle or not based on whether the value of the index register i is "0" or not. If the present cycle is a first cycle, then control goes to step S44 in which the guidance rendering means 414 stores an initial value "0" in an index register n used to display the bar 320, thus initializing the index register n.

In step S45, the progressing pattern selecting means 422 reads a bar display progressing pattern corresponding to the present monster 302 from a plurality of bar display progressing patterns. Each of the bar display progressing patterns comprises a plurality of registered progress data each representing the interval which the bar progresses per frame, then control goes to step S46 in which the progressing pattern selecting means 422 increments the value of the index register i by "1".

Then, the bar rendering means 416 performs its processing sequence. First, in step S47, the bar rendering means 416 reads nth progress data from the bar display progressing pattern read in step S45. Then, in step S48, the bar rendering means 416 determines whether there is progress data or not. If there is progress data, then control goes to step S49 in which the bar rendering means 416 renders the bar 320 as a semitransparent bar whose leading end 320a is in substantially alignment with the position represented by the progress data.

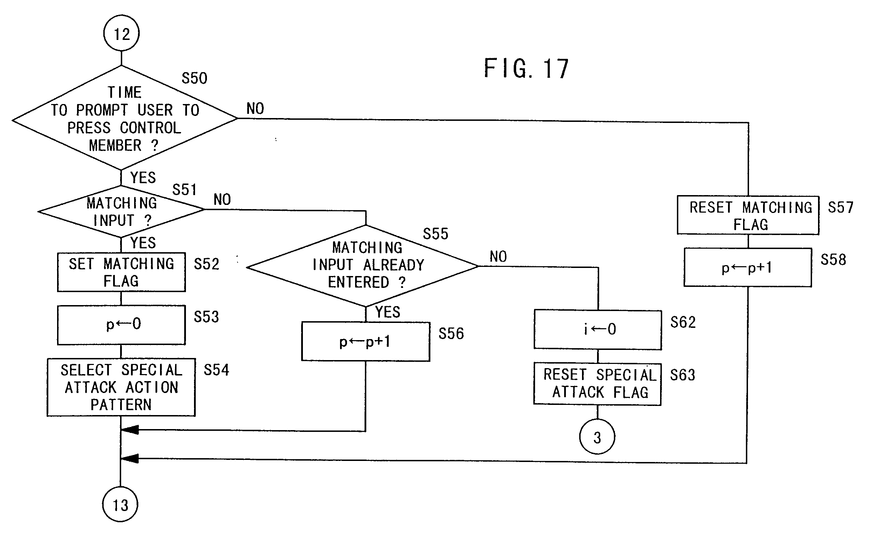

Then, the special action continuation determining means 418 performs its processing sequence. First, in step S50 shown in FIG. 17, the special action continuation determining means 418 determines whether the leading end 320a of the bar 320 reaches the indicia display area 316 (see FIG. 7) or one of the strips 318 (see FIG. 8), i.e., whether the time to prompt the user to press the control member is reached, or not, based on the coordinates of the leading end 320a of the bar 320 and the range in which the indicia display area 316 or the strip 318 is displayed.

If the time to prompt the user to press the control member is reached, then control goes to step S51 in which the special action continuation determining means 418 determines whether there is a matching control input from the manual controller 16 or not, i.e., whether a control member represented by the indicia 314 corresponding to the indicia display area 316 or the strip 318 is pressed by the user or not. If there is a matching control input from the manual controller 16, then control goes to step S52 in which the special action continuation determining means 418 sets a matching flag to "1".

In step S53, the special action continuation determining means 418 stores an initial value "0" in an index register p used to cause the principal character 300 to perform a special action, thus initializing the index register p. In step S54, the special action continuation determining means 418 selects a special action pattern corresponding to the indicia 314, for example, from a plurality of special action patterns. Each of the special action patterns comprises an array of plural action data, and object data of the principal character 300 is rendered based on the array of plural action data for thereby making one special action on the display monitor 18.

If there is no matching control input in step S51, then control goes to step S55 in which the special action continuation determining means 418 determines whether a matching control input from the manual controller 16 has already been entered or not based on whether the matching flag is set to "1" or not. If a matching control input from the manual controller 16 has already been entered, then control goes to step S56 in which the special action continuation determining means 418 increments the value of the index register p by "1".

If the time to prompt the user to press the control member is not reached, then control goes to step S57 in which the special action continuation determining means 418 sets the matching flag to "0", thus resetting the matching flag. Thereafter, in step S58, the special action continuation determining means 418 increments the value of the index register p by "1".

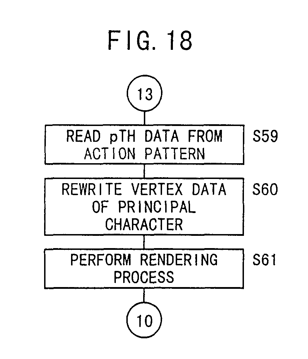

When the processing in step S54, the processing in step S56, or the processing in step S58 is finished, control goes to step S59 shown in FIG. 18 in which the special action continuation determining means 418 reads pth action data from the selected special action pattern. Thereafter, control goes to step S60 in which the special action continuation determining means 418 rewrites vertex data of the object data of the principal character 300 based on the content of the present action data. Then, in step S61, the special action continuation determining means 418 renders three-dimensional image data of the principal character 300 based on the object data of the principal character 300, and stores the three-dimensional image data of the principal character 300 in the image memory 244.

When the processing in step S61 is finished, control goes to step S25 shown in FIG. 12 in which the image display means 406 outputs image data stored in the image memory 244 to the display monitor 18, which displays an image thereon based on the image data. After the processing in step S25, control returns to step S5 shown in FIG. 10 to repeat the processing from step S5.

The processing in steps S5 - S10, steps S40 - S61, step S25 is repeated to display an image in which the principal character 300 makes a special action to deliver a succession of attacking techniques to the monster 302.

If no matching input is entered when the leading end 320a of the bar 320 reaches the indicia display area 316 or one of the strips 318 while the principal character 300 is making the special action, then control goes via step S55 shown in FIG. 17 to step S62 in which the special action continuation determining means 418 initializes the index register i. Thereafter, in step S63, the special action continuation determining means 418 stores "0" in the special attack flag, thus resetting the special attack flag. Thereafter, control goes to step S5 shown in FIG. 10 in which the normal action rendering means 402 performs its processing sequence. That is, the principal character 300 changes from the special action back to the normal action.

If a matching input is entered with respect to each of all the indicia 314 displayed in the guidance 310, then control goes from step S48 shown in FIG. 16 to step S64 in which the special action continuation determining means 418 initializes the index register i. Thereafter, in step S65, the special action continuation determining means 418 stores "0" in the special attack flag, thus resetting the special attack flag. Control then goes to step S34 shown in FIG. 14 in which the special action continuation determining means 418 displays an image showing a victory action, e.g., a triumphant gesture, made by the principal character 300, and an acquisition of a prize from the monster 302. The processing sequence of the battle mode processing means 400 is now put to an end.

As described above, the battle mode processing means 400 as it is applied to a battle scene in a role-playing game or a combat game, for example, first performs a normal action, i.e., a normal battle action, between the principal character 300 and the monster 302. When a certain condition is satisfied in the normal battle action, e.g., when the monster 302 stands with its back facing a wall or puts a foot into a step, the principal character 300 changes from the normal battle action to a special battle action. The special battle action is an action to deliver a dead blow such as a succession of attacking techniques in a combat game, for example.

When the control input from the user satisfies a control condition indicated by the guidance 310 displayed on the display monitor 18, the special battle action is completed, and the opponent, i.e., the monster 302, falls down.

Therefore, battle scenes, which would tend to be monotonous in role-playing games, for example, are turned into realistic scenes, and the user or game player is allowed to easily deliver a succession of attacking techniques by operating the manual controller according to the guidance 310. If the entertainment system according to the present invention is applied to play a video game, then the user or game player is continuously interested in the video game.

When the principal character 300 changes from the normal action to the special action, the change is indicated by the icon 306. Therefore, the user is aware of the entry into the special action, i.e., can be mentally prepared to enter the special action, and hence can subsequently make smooth control actions to perform the special action. The icon 360 is thus effective to allow children and old people to enjoy the video game.

The guidance 310 includes an indicia 314 rendered to indicate at least one control member on the manual controller 16. The time to prompt the user to press a control member corresponding to the indicia 314 and the time at which the user presses the control member are compared with each other, and it is determined whether the principal character 300 is to make a special action or not based on the compared result. The user thus only needs to operate the control member corresponding to the indicia 314 at the prompting time indicated by the guidance 310.

In this embodiment, the prompting time is the time when the leading end 320a of the bar 320 as it progresses randomly from the left end to right end of the bar display area 312 reaches the indicia display area 316 or strip 318 corresponding to the indicia 314. Therefore, the user may press the control member corresponding to the indicia 314 at the time when the leading end 320a of the bar 320 reaches the indicia display area 316 or strip 318. The user can deliver a succession of attacking techniques which are highly difficult to achieve, after being trained to a certain extent in a relatively short period of time. Consequently, the user will not easily give up the video game while playing the video game.

The number and array of indicia 314 displayed in the guidance 310 and the progressing pattern of the bar 320 displayed in the bar display area 312 of the guidance 310 are changed depending on the characteristics of the monster 302. Accordingly, elements of fun are added to battle scenes, which would tend to be monotonous, keeping the user interested in the video game.

If the guidance 310 is displayed in a lower region or a corner of the display screen of the display monitor 18, then the user may possibly overlook a special action made by the principal character 300 displayed in a central area of the display screen because the user may be distracted to the progress of the bar 320 displayed in the lower region or the corner of the display screen.

According to the embodiment of the present invention, at least the guidance 310 and the bar 320 are displayed as semitransparent images, and hence can be displayed in a large size in the center of the display screen, as shown in FIG. 7, rather than in a lower region or a corner of the display screen. As a result, the user can see a special action made by the principal character 300 and presses control members on the manual controller 16 while simultaneously confirming the progressing pattern of the bar 320. Therefore, the user can see and enjoy various special actions made by the principal character 300.

Although a certain preferred embodiment of the present invention has been shown and described in detail, it should be understood that various changes and modifications may be made therein without departing from the scope of the appended claims.

## Claims

1. An entertainment system comprising:
an entertainment apparatus (12) for executing various programs;
at least one manual controller (16) for entering control requests from the user into said entertainment apparatus (12);
a display unit (18) for displaying images outputted from said entertainment apparatus (12);
normal action rendering means (402) for displaying a normal action image in which at least two hypothetical characters (300, 302) are making a normal action; and
special action rendering means (404) for displaying a special action image in which at least one of said hypothetical characters (300) changes from a normal action to a special action when a predetermined condition is satisfied, and the special action made by said one of the hypothetical characters (300) is completed when a control action made by the user satisfies a predetermined control condition indicated in a guidance (310).

2. An entertainment system according to claim 1, wherein said special action rendering means (404) comprises:
icon rendering means (412) for displaying an icon (306) indicative of said special action when said hypothetical character (300) changes from the normal action to the special action.

3. An entertainment system according to claim 1 or 2, wherein said special action rendering means (404) comprises:
guidance rendering means (414) for rendering an indicia representing at least one of control members on said manual controller (16) as said guidance (310); and
special action continuation determining means (418) for comparing a time to prompt the user to press the control member corresponding to said indicia (314) with a time when the user presses the corresponding control member, and determining whether said hypothetical character (300) is to make the special action based on a compared result.

4. An entertainment system according to claim 3, wherein said special action continuation determining means (418) comprises:
means for transferring control over to said normal action rendering means (402) when the time when the user presses the corresponding control member deviates from the time to prompt the user to press the control member corresponding to said indicia (314) beyond an allowable range.

5. An entertainment system according to claim 3 or 4, wherein said special action rendering means (404) comprises:
means (420) for changing the number of indicia (314) and the time to prompt the user to press the control member corresponding to each of said indicia (314), depending on characteristics of the hypothetical character (302) other than the hypothetical character (300) which makes the special action, among said at least two hypothetical characters (300, 302).

6. An entertainment system according to any one of claims 3 to 5, wherein said special action rendering means (404) comprises:
bar rendering means (416) for rendering a bar (320) which progresses randomly toward said indicia (314);
wherein said time to prompt the user to press the control member corresponding to said indicia (314) represents a time when a leading end (320a) of said bar (320) reaches said indicia (314).

7. An entertainment system according to claim 6, wherein said special action rendering means (404) comprises:
means (422) for changing a progressing pattern of said bar (320) depending on characteristics of the hypothetical character (302) other than the hypothetical character (300) which makes the special action, among said at least two hypothetical characters (300, 302).

8. An entertainment system according to any one of claims 3 to 7, further comprising:
means (416) for rendering at least said bar (320) as a semitransparent bar in front of said hypothetical characters (300, 302).

9. An entertainment apparatus for connection to a manual controller (16) for outputting a control request from the user and a display unit (18) for displaying images, comprising:
normal action rendering means (402) for displaying an image in which at least two hypothetical characters (300, 302) are making a normal action; and
special action rendering means (404) for displaying an image in which at least one of said hypothetical characters (300) changes from a normal action to a special action when a predetermined condition is satisfied, and the special action made by said one of the hypothetical characters (300) is completed when a control action made by the user satisfies a predetermined control condition indicated in a guidance (310).

10. A recording medium storing a program and data for use in an entertainment apparatus (12) for connection to a manual controller (16) for outputting a control request from the user, and a display unit (18) for displaying images, said program comprising the steps of:
displaying a normal action image in which at least two hypothetical characters (300, 302) are making a normal action; and
displaying a special action image in which at least one of said hypothetical characters (300) changes from a normal action to a special action when a predetermined condition is satisfied, and the special action made by said one of the hypothetical characters (300) is completed when a control action made by the user satisfies a predetermined control condition indicated in a guidance (310).

11. A recording medium according to claim 10, wherein said step of displaying a special action image comprises the step of:
displaying an icon (306) indicative of said special action when said hypothetical character (300) changes from the normal action to the special action.

12. A recording medium according to claim 10 or 11, wherein said step of displaying a special action image comprises the steps of:
rendering an indicia (314) representing at least one of control members on said manual controller (16) as said guidance (310); and
comparing a time to prompt the user to press the control member corresponding to said indicia (314) with a time when the user presses the corresponding control member, and determining whether said hypothetical character (300) is to make the special action based on a compared result.

13. A recording medium according to claim 12, wherein said step of determining whether said hypothetical character (300) is to make the special action based on a compared result comprises the step of:
transferring control over to said normal action rendering means (402) when the time when the user presses the corresponding control member deviates from the time to prompt the user to press the control member corresponding to said indicia (314) beyond an allowable range.

14. A recording medium according to claim 12 or 13, wherein said step of displaying a special action image comprises the step of:
changing the number of indicia (314) and the time to prompt the user to press the control member corresponding to each of said indicia (314), depending on characteristics of the hypothetical character (302) other than the hypothetical character (300) which makes the special action, among said at least two hypothetical characters (300, 302).

15. A recording medium according to any one of claims 12 to 14, wherein said step of displaying a special action image comprises the step of:
rendering a bar (320) which progresses randomly toward said indicia (314);
wherein said time to prompt the user to press the control member corresponding to said indicia (314) represents a time when a leading end (320a) of said bar (320) reaches said indicia (314).

16. A recording medium according to claim 15, wherein said step of displaying a special action image comprises the step of:
changing a progressing pattern of said bar (320) depending on characteristics of the hypothetical character (302) other than the hypothetical character (300) which makes the special action, among said at least two hypothetical characters (300, 302).

17. A recording medium according to any one of claims 12 to 16, further comprising the step of:
rendering at least said bar (320) as a semitransparent bar in front of said hypothetical characters (300, 302).

18. A program readable and executable by a computer, for use in an entertainment apparatus (12) for connection to a manual controller (16) for outputting a control request from the user, and a display unit (18) for displaying images, said program comprising the steps of:
displaying a normal action image in which at least two hypothetical characters (300, 302) are making a normal action; and
displaying a special action image in which at least one of said hypothetical characters (300) changes from a normal action to a special action when a predetermined condition is satisfied, and the special action made by said one of the hypothetical characters (300) is completed when a control action made by the user satisfies a predetermined control condition indicated in a guidance (310).
